# Europäisches Patentamt
# European Patent Office
# Office européen des brevets

(11) Veröffentlichungsnummer: **0 102 603**
**B1**

(12) **EUROPÄISCHE PATENTSCHRIFT**

(45) Veröffentlichungstag der Patentschrift:
04.02.87

(21) Anmeldenummer: **83108456.1**

(22) Anmeldetag: **27.08.83**

(51) Int. Cl.⁴: **F 16 N 7/32**

(54) **Vorrichtung für die Zufuhr von fein verteilter Flüssigkeit.**

(30) Priorität: **07.09.82 JP 134861/82**

(43) Veröffentlichungstag der Anmeldung:
**14.03.84 Patentblatt 84/11**

(45) Bekanntmachung des Hinweises auf die Patenterteilung:
**04.02.87 Patentblatt 87/6**

(84) Benannte Vertragsstaaten:
**DE FR GB IT SE**

(56) Entgegenhaltungen:
**DE-A-1 503 550**
**FR-A-1 319 612**
**FR-A-1 577 915**
**GB-A-2 017 223**
**US-A-3 753 528**
**US-A-3 862 544**
**US-A-3 890 064**

(73) Patentinhaber: **Shoketsu Kinzoku Kogyo Kabushiki Kaisha, 1-16- 4, Shimbashi Minato- ku, Tokio (JP)**

(72) Erfinder: **Nakai, Hisao SHOKETSU KINZOKU KOGYO CO., LTD., Soka Plant 938 Inari- cho, Soka- City Saitama Pref. (JP)**

(74) Vertreter: **Keil, Rainer A., Dipl.- Phys. Dr., Patentanwälte KEIL & SCHAAFHAUSEN Ammelburgstrasse 34, D-6000 Frankfurt am Main 1 (DE)**

## Beschreibung

Die Erfindung bezieht sich auf eine Vorrichtung zur Zufuhr von Flüssigkeit, insbesondere Öl, zu pneumatischen Werkzeugen, Zylindern, Ventilen oder anderen pneumatischen Geräten, mit einem Hauptluftströmungsweg, einer Luftaufnahme in dem Hauptluftströmungsweg, einem Leitungsweg, welcher mit der Luftaufnahme in Strömungsverbindung steht, und mit einem die Flüssigkeit enthaltenden Tank, welcher mit einem ein Rückschlagventil aufweisenden Leitungsweg für das Wegführen der Flüssigkeit, in Strömungsverbindung steht.

Eine solche Vorrichtung ist aus der US-A-3 862 544 bekannt. Hiernach wird ein konstanter Schmiermittelstrom an ein pneumatisches Werkzeug geführt. Zu diesem Zweck hat die Vorrichtung eine Pumpenkammer mit einer Aufnahmeöffnung, die mit einem Schmiermittelvorratstank in Verbindung steht, sowie eine Abgabeöffnung für das Wegführen des Schmiermittels zu dem Werkzeug. Ein Hauptluftströmungsweg ist an eine Luftdruckquelle für den Antrieb des Werkzeuges angeschlossen. Ein normalerweise geschlossenes Steuerventil regelt die Strömung durch den Hauptluftströmungsweg. Bei Druckabfall über dem Ventil öffnet es. Die Pumpenkammer wird in Abhängigkeit von dem Luftstrom abwechselnd expandiert und kontrahiert, wodurch das Schmiermittel zu den Arbeitsflächen des Werkzeuges gefördert wird. Für jeden Verbraucher ist eine einzelne Zufuhrvorrichtung erforderlich.

Aufgabe der vorliegenden Erfindung ist die Schaffung einer Vorrichtung der eingangs genannten Art, mit welcher selbstregelnd fein verteilte Flüssigkeit unter stabilem Förderdruck dem Hauptluftströmungsweg zugeführt wird.

Diese Aufgabe wird erfindungsgemäß gelöst durch Zweigleitungen, welche von dem mit der Luftaufnahme in Strömungsverbindung stehenden Leitungsweg abzweigen, eine Drucksteigerungspumpe mit einem Paar von Zylindern, die einander gegenüberliegen, Kolben, die gleitend in den Zylindern aufgenommen und miteinander über einen Stab verbunden sind, Rückschlagventile, über welche die Zweigleitungen mit den kopfseitigen Enden der jeweiligen Zylinder in Strömungsverbindung stehen, zwei Umschaltventile, welche von dem jeweiligen Kolben am jeweiligen Hubende der Kolben betätigt werden, ein Richtungsumschaltventil, welches von den von dem jeweiligen Kolben betätigten Umschaltventilen betriebsmäßig umgeschaltet wird, ein Differenzdruckregulierventil, welches mit dem mit der Luftaufnahme in Strömungsverbindung stehenden Leitungsweg in Strömungsverbindung steht, einen Leitungsweg für die Übermittlung eines Druckes durch das Differenzdruckventil zu den stabseitigen Enden der jeweiligen Zylinder, wobei der Leitungsweg mit dem Richtungsumschaltventil verbunden ist, einen Leitungsweg, der an seinem einen Ende ein in den Tank öffnendes Mundstück für die Erzeugung feiner Flüssigkeitsteilchen trägt und mit den kopfseitigen Enden der jeweiligen Zylinder jeweils über Rückschlagventile in Strömungsverbindung steht, und mit einem sich in den Hauptluftströmungsweg öffnenden Strömungsauslaß mit welchem der mit dem Tank in Strömungsverbindung stehende Leitungsweg in Strömungsverbindung steht.

Hierdurch wird eine Versorgung fein verteilter Flüssigkeit mit einem Druckverstärker erreicht, wobei ein stabiler Förderdruck unter Verwendung des gesamten Luftdruckes und unter Anwendung einer Selbstregelung erhalten wird, um das Umschaltventil am Hubende für das Infunktionsetzen der Drucksteigerungspumpe zu betätigen, während das Differenzdruckregulierventil benutzt wird, um den Differenzdruck einzustellen und die Veränderung des Differenzdruckes so gering wie möglich durch Rückkopplung des Förderdruckes zu halten.

Weitere Ziele, Merkmale, Vorteile und Anwendungsmöglichkeiten der vorliegenden Erfindung ergeben sich aus der nachfolgenden Beschreibung eines Ausführungsbeispieles anhand der Zeichnung.

Es zeigen:

Fig. 1 ein Schaltdiagramm einer die Erfindung aufweisenden Vorrichtung,

Fig. 2 eine Frontansicht von Hauptabschnitten der Konstruktion,

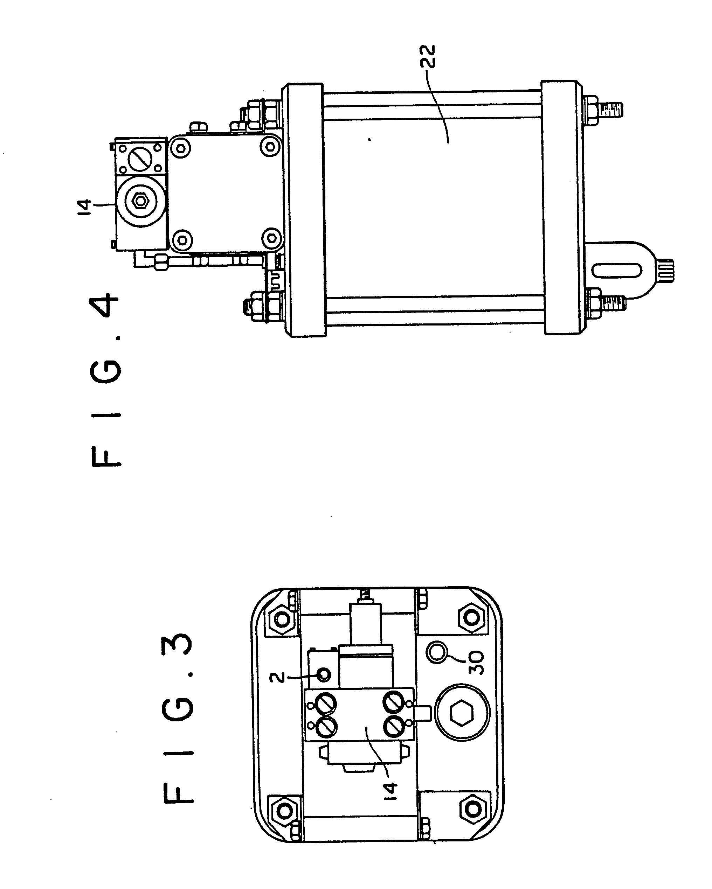

Fig. 3 eine Draufsicht derselben Konstruktion, und

Fig. 4 eine Seitenansicht der Konstruktion von Fig. 2.

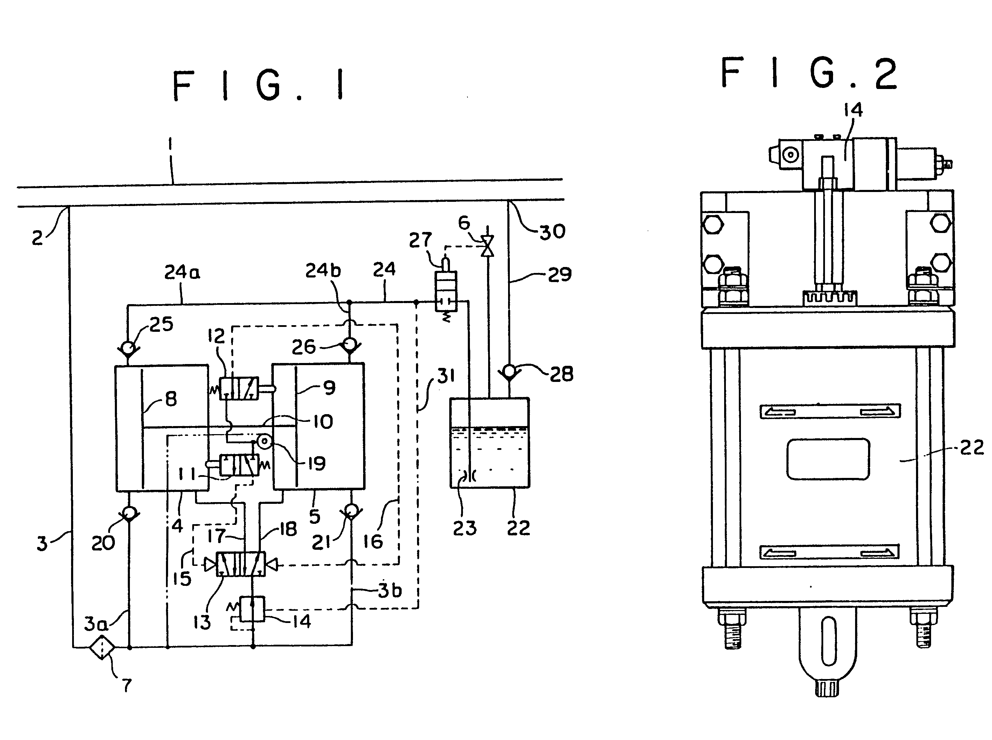

Fig. 1 zeigt einen Hauptluftströmungsweg 1. Nachfolgend wird der Fall beschrieben, in welchem der Hauptluftströmungsweg 1 ein Ölnebelzufuhrweg zu einem Appareat eines Maschinenwekzeuges od. dgl. ist. Eine Luftaufnahme 2 steht über Zweigleitungswege 3a, 3b eines Leitungsweges 3 mit den Kopfseitenenden von Zylindern 4, 5 eines Paares von Drucksteigerungspumpen in Strömungsverbindung, welche Drucksteigerungspumpen einander gegenüberliegend angeordnet sind. Ein Sieb oder Filter 7 ist zwischen den Leitungsweg 3 und die Zweigleitungswege 3a, 3b geschaltet.

Kolben 8, 9 gleiten innerhalb der beiden Zylinder 4, 5 luft- und wasserdicht und sind über einen Stab 10 miteinander verbunden. Umschaltventile 11, 12, die von den jeweiligen Kolben 8, 9 am Hubende umgeschaltet werden, sind auf der Seite des Stabes 10 vorgesehen. Ein Richtungsumschaltventil 13, welches betriebsmäßig von den Umschaltventilen 11, 12 umgeschaltet den, das seinerseits mit dem Leitungsweg 3 in Strömungsverbindung steht. Das Richtungsumschaltventil 13 arbeitet wahlweise über die Leitungswege 17, 18 in die stabseitigen Enden der Zylinder 4, 5, deren Luftdruck durch das Differenzdruckregulierventil 14 eingestellt ist, das betriebsmäßig durch einen Luftdruck umgeschaltet wird, der von den Umschaltventilen 11, 12 über die Leitungswege 15, 16 übermittelt wird, betätigt, ist in der Zeichnung als getrenntes Bauelement dargestellt, während natürlich die Druckluft im allgemeinen von einer Zweigleitung des Leitungsweges 3 abgenommen wird. Rückschlagventile 20, 21, die eine Strömung nur in Richtung der jeweiligen Zylinder 4, 5 zulassen, liegen in den Zweigleitungswegen 3a, 3b, während Zweigleitungswege 24a, 24b von einem Leitungsweg 24 abzweigen, der sich über eine feine Teilchen oder Tröpfchen erzeugende Mündung 23 in den Bodenbereich eines Tanks 22 (in dem dargestellten Ausführungsbeispiel ein Öltank) erstreckt. Der Tank 22, der die zu zerstäubende Flüssigkeit enthält, steht mit den Zylindern 4, 5 über Rückschlagventile 25, 26 in Verbindung, die eine Strömung nur in Richtung von den Zylindern 4, 5 aus zulassen. Zwischen den Rückschlagventilen 25, 26 und dem Tank 22 liegt in dem Leitungsweg 24 ein Umschaltventil 27, welches betriebsmäßig von einem Ölzufuhrventil 6 geöffnet und geschlossen wird. Ein Leitungsweg 29, der mit einem Rückschlagventil 28 ausgestattet ist, welches eine Strömung nur in Richtung von dem Tank 22 aus zuläßt, verbindet die Oberseite des Tanks 22 mit einem Strömungsauslaß 30 für zerstäubte Flüssigkeit, die zu dem Hauptluftströmungsweg 1 führt. Weiterhin zweigt ein Rückkopplungsleitungsweg 31 von dem Leitungsweg 24 zu dem Differenzdruckregulierventil 14 ab. In dem Schaltzustand, wie er in der Fig. 1 dargestellt ist, wird Druckluft von dem Hauptluftströmungsweg 1 über den Leitungsweg 3 in die Kopfseitenkammern, d.h. die beiden voneinander abgewandten Kammern der Zylinder 4, 5 über die Zweigleitungswege 3a, 3b eingeführt, während der Druck über das Differenzdruckregulierventil 14 in die stabseitige Kammer des Zylinders 5 über das Richtungsumschaltventil 13 eingeführt wird. Im Ergebnis wird der der kopfseitigen Kammer des Zylinders 5 über den Leitungsweg 3b zugeführte Druck zuzüglich des der stabseitigen Kammer zugeführten Druckes in die Mündung 23 in dem Tank 22 über die Leitung 24 geführt. Die feinen Tröpfchen bzw. Teilchen, die dort entstehen, werden dem Hauptluftströmungsweg 1 durch den Leitungsweg 29 und über den Strömungsauslaß 30 zugeführt, um an eine vorbestimmte Stelle mittels Luftstrom transportiert zu werden.

Wenn die Kolben 9 und 8 in Fig. 1 nach rechts bewegt werden und das Hubende erreichen, schaltet der Kolben 8 betriebsmäßig das Umschaltventil 11 um. Folglich wird auch das Richtungsumschaltventil 13 umgeschaltet. Dann wird der von dem Differenzdruckregulierventil 14 eingestellte Druck der stabseitigen Kammer in dem Zylinder 4 zugeführt, um den Kolben 8 nach links zu bewegen, während Druckluft in die feine Tröpfchen erzeugende Düse 23 über den Leitungsweg 24 geführt wird, um eine kontinuierliche Betriebsweise, wie zuvor geschildert, fortzusetzen. Durch diese kontinuierliche Betriebsweise kann eine bestimmte Menge an zerstäubter Flüssigkeit kontinuierlich an den Hauptluftströmungsweg 1 abgegeben werden. In diesem Fall wird der Druck in dem Leitungsweg 24 auf das Differenzdruckregulierventil 14 über den Leitungsweg 31 zurückgeführt, so daß eine Veränderung des Differenzdruckes überprüft und Flüssigkeit immer unter stabilen Differenzdruckbedingungen zerstäubt werden kann.

## Patentansprüche

1. Vorrichtung zum Zuführen von Flüssigkeit mit einem Hauptluftströmungsweg (1), einer Luftaufnahme (2) in dem Hauptluftströmungsweg (1), einem Leitungsweg (3), welcher mit der Luftaufnahme (2) in Strömungsverbindung steht, und mit einem die Flüssigkeit enthaltenden Tank (22), welcher mit einem ein Rückschlagventil (28) aufweisenden Leitungsweg (29) für das Wegführen der Flüssigkeit in Strömungsverbindung steht, gekennzeichnet durch Zweigleitungen (3a, 3b), welche von dem Leitungsweg (3) abzweigen, eine Drucksteigerungspumpe mit einem Paar von Zylindern (4, 5) die einander gegenüberliegen, Kolben (8, 9), die gleitend in den Zylindern (4, 5) aufgenommen und miteinander über einen Stab (10) verbunden sind, Rückschlagventile (20, 21), über welche die Zweigleitungen (3a, 3b) mit den kopfseitigen Enden der jeweiligen Zylinder (4, 5) in Strömungsverbindung stehen, zwei Umschaltventile (11, 12), welche von dem jeweiligen Kolben (8, 9) am jeweiligen Hubende der Kolben (8, 9) betätigt werden, ein Richtungsumschaltventil (13), welches von den Umschaltventilen (11, 12) betriebsmäßig umgeschaltet wird, ein Differenzdruckregulierventil (14), welches mit dem Leitungsweg (3) in Strömungsverbindung steht, einen Leitungsweg (17, 18) für die Übermittlung eines Druckes durch das Differenzdruckregulierventil (14) zu den stabseitigen Enden der jeweiligen Zylinder (4, 5), wobei der Leitungsweg (17, 18) mit dem Richtungsumschaltventil (13) verbunden ist, einen Leitungsweg (24), der an seinem einen Ende ein in den Tank (22) öffnendes Mundstück (23) für die Erzeugung feiner Flüssigkeitsteilchen trägt und mit den kopfseitigen Enden der jeweiligen Zylinder (4, 5) jeweils über Rückschlagventile (25, 26) in Strömungsverbindung steht, und mit einem sich in den Hauptluftströmungsweg (1) öffnenden Strömungsauslaß (30), mit welchem der Leitungsweg (29) in Strömungsverbindung steht.

**Claim**

1. A liquid supply apparatus comprising a main air path (1), an air intake (2) formed in the main air path (1), a pipe path (3) in flow communication with the said air intake (2) and comprising a liquid containing tank (22) in flow communication with a pipe path (29) provided with a check vale (25), for leading away the liquid, characterized by branch pipes (3a, 3b) branched from said pipe path (3), a booster comprising a pair of oppositely disposed cylinders (4, 5), pistons (8, 9) slidingly received in cylinders (4, 5) and interconnected through a rod (10), check valves (20, 21) through which the branch pipes (3a, 3b) are in flow communication with the head-sided ends of the respective cylinders (4, 5), two change-over valves (11, 12) operated by the respective pistons (8, 9) at the respective stroke end of the pistons (8, 9), a direction change-over valve (13) operatively switched over by the change-over valves (11, 12), a differential pressure regulating valve (14) in flow communication with the pipe path (3), a pipe path (17, 18) for communicating a pressure through the differential pressure regulating valve (14) to the rodsided ends of the respective cylinders (4, 5), with the pipe path (17, 18) being connected to said direction change-over valve (13), a pipe path (24) carrying at the one end thereof a nozzle (23) opened to said tank (22), for generating fine-grain liquid particles and being in flow communication with the head-sided ends of the respective cylinders (4, 5) respectively through check valves (25, 26), and with a flow outlet (30) opened to said main air path (1) and in flow communication with said pipe path (29).

**Revendication**

1. Appareil pour l'alimentation de liquide, comportant une voie d'air principale (1), une entrée d'air formée dans la voie d'air principale (1), une voie de conduction (3) en communication avec l'entrée d'air (2), et comportant un réservoir (22) contenant le liquide et étant en communication avec une voie de conduction (29) pourvue d'une soupape de retenue (28) pour emmener le liquide, caractérisé par des conduites branchées (3a, 3b) branchant sur la voie de conduction (3), une pompe à augmenter la pression comportant une paire de cylindres (4, 5) opposés, des pistons (8, 9) receuillis dans une manière coulissante dans les cylindres (4, 5) et reliés l'un à l'autre par l'intermédiaire d'une barre (10), des soupapes de retenue (20, 21) par l'intermédiaire desquelles les conduites branchées (3a, 3b) sont en communication avec les bouts frontals des cylindres (4, 5) respectives, deux soupapes d'inversion (11, 12) commandées par le piston (8, 9) respective au bout de levée respective des pistons (8, 9), une soupape d'inversion directionelle (13) commutée dans une manière fonctionelle par des soupapes d'inversion (11, 12), une soupape (14) à régler la pression différentielle en communication avec la voie de conduction (3), une voie de conduction (17, 18) pour transmettre une pression par l'intermédiaire de la soupape (14) à régler la pression différentielle aux bouts à côté de barre des cylindres (4, 5) respectives, la voie de conduction (17, 18) étant reliée avec la soupape d'inversion directionelle (13), une voie de conduction (24) portant à l'un de ses bouts un tuyau (23) ouvert vers le reservoir (22) à produire des particules de liquide fines et en communication avec les bouts frontals des cylindres (4, 5) respectives par l'intermédiaire des soupapes de retenue (25, 26), et avec une sortie (30) ouverte vers la voie d'air principale (1) et en communication avec la voie de conduction (29).

# FIG. 1

# FIG. 2

0 102 603

F I G . 3

F I G . 4